# EUROPÄISCHE PATENTSCHRIFT

(11) **EP 4 080 252 B1**
(45) Veröffentlichungstag und Bekanntmachung des Hinweises auf die Patenterteilung: **25.12.2024**
(21) Anmeldenummer: 22158728.0
(22) Anmeldetag: 25.02.2022
(51) Int. Cl.: G01V 8/20

(54) **LICHTVORHANG**
LIGHT CURTAIN
RIDEAU LUMINEUX

(30) Priorität: 20.04.2021 DE 202021102112 U
(43) Veröffentlichungstag der Anmeldung: 26.10.2022
(73) Patentinhaber: Leuze electronic GmbH + Co. KG, 73277 Owen/Teck (DE)
(72) Erfinder: Feller, Bernhard, 86316 Friedberg (DE); Jüttner, Andreas, 81543 München (DE); Hartl, Paul, 80797 München (DE)
(74) Vertreter: Ruckh, Rainer Gerhard

(56) Entgegenhaltungen:
- EP-A1- 1 437 542
- DE-A1- 102006 050 189
- DE-A1- 102015 007 354
- DE-U1- 202006 012 454
- DE-U1- 202019 106 396

## Beschreibung

Die Erfindung betrifft einen Lichtvorhang gemäß dem Oberbegriff des Anspruchs 1.

Derartige Lichtvorhänge dienen generell zur Erfassung von Objekten in einem Überwachungsbereich. Der Lichtvorhang umfasst hierzu eine Sendereinheit mit einem sendeseitigen Gehäuse, in welchem eine Reihenanordnung von Lichtstrahlen emittierenden Sendern vorgesehen ist. Weiterhin ist eine Empfängereinheit mit einem empfangsseitigen Gehäuse vorgesehen, in welchem eine Reihenanordnung von Lichtstrahlen empfangenden Empfängern angeordnet ist.

Die Sendereinheit und die Empfängereinheit sind an gegenüberliegenden Rändern des Überwachungsbereichs so angeordnet, dass bei freiem Überwachungsbereich die Lichtstrahlen jedes Senders auf einen zugeordneten Empfänger treffen. Bei einem Objekteingriff im Überwachungsbereich wird der Strahlengang wenigstens einer der Sender unterbrochen. In einer Auswerteeinheit wird in Abhängigkeit der Empfangssignale der Empfänger ein Objektfeststellungssignal generiert.

Vor dem Betrieb des Lichtvorhangs müssen die Sendereinheit und die Empfängereinheit so gegeneinander ausgerichtet werden, dass bei freiem Überwachungsbereich die Lichtstrahlen jedes Senders auf den zugeordneten Empfänger treffen.

Eine Schwierigkeit besteht hierbei darin, dass die Sender im Allgemeinen Sendelicht im Infrarotbereich emittieren, das für das menschliche Auge nicht sichtbar ist.

Um die Sendereinheit und die Empfängereinheit gegeneinander auszurichten ist es bekannt, als Ausrichthilfe einen Laserpointer an der Sendereinheit zu fixieren. Der Laserpointer strahlt einen sichtbaren Laserstrahl ab, der auf die Empfängereinheit geführt ist. Anhand der auf der Empfängereinheit abgebildeten Laserlichtfläche kann die Empfängereinheit relativ zur Sendereinheit, oder umgekehrt, ausgerichtet werden.

Nachteilig hierbei ist, dass der Laserpointer eine zusätzliche Einrichtung darstellt, womit ein zusätzlicher Konstruktions- und Kostenaufwand verbunden ist. Weiterhin ist nachteilig, dass der Laserpointer an der Sendereinheit montiert werden muss, was umständlich und zeitaufwändig ist.

Die DE 10 2015 007 354 A1 betrifft ein Verfahren zur Überwachung der Ausrichtung eines Lichtgitters bestehend aus einer Sendeeinheit, die eine Vielzahl von Lichtstrahlen emittierende Lichtquellen aufweist, deren jeweiliger Lichtstrahl einen vorgegeben Strahlengang entlang einer optischen Achse geführt ist und einer Empfangseinheit, die aus einer Vielzahl von Sensoren gebildet ist, die jeweils einer Lichtquelle zugeordnet sind und einer Steuer- und Auswerteeinheit. Das Verfahren umfasst folgende Verfahrensschritte:
- Aussenden von mindestens einem vereinzelten Lichtstrahl durch eine oder mehrere der Lichtquellen.
- Erfassen des jeweils vereinzelten Lichtstrahls durch mindestens einen Sensor der Empfangseinheit.
- Ermitteln einer Ist-Position des erfassten Lichtstrahls an der Empfangseinheit anhand der Lichtstrahlverteilung an mehreren benachbarten Sensoren.
- Bestimmen der Ausrichtgüte des Lichtgitters auf der Grundlage der durch die optische Achse des jeweiligen Lichtstrahls vorgegeben Soll-Position auf der Empfangseinheit und der ermittelten Ist-Position des Lichtstrahls.

Die DE 20 2006 012 454 A1 betrifft einen optoelektronischen Sensor mit einem Lichtsender, wobei dieser wenigstens ein Lichtsignal aussendendes Sendeelement aufweist und einen über eine Distanz zu dem Lichtsender angeordneten Lichtempfänger, der wenigstens ein Empfangselement zum Empfangen der Lichtsignale des Sendeelementes aufweist, wobei eine Auswerteeinheit zur Auswertung einer auf das Empfangselement gelangende Lichtstärke als Maß für die Güte einer Ausrichtung vorhanden ist. Dem Sendeelement ist ein Filterelement nachgeordnet, wobei das Filterelement einen inneren Bereich aufweist, der Licht im Wesentlichen ungehindert durchlässt und der innere Bereich von einem lichtdämpfenden äußeren Bereich umgeben ist.

Die EP 1 437 542 A2 betrifft ein Lichtgitter und ein Verfahren zu dessen Justierung. Das erfindungsgemäße Lichtgitter weist eine eine vorgegebene Anzahl von Sendelichtstrahlen emittierenden Sendern aufweisende Sendereinheit und eine eine vorgegebene Anzahl von Empfängern aufweisende Empfängereinheit auf. Die Sender und Empfänger bilden jeweils Strahlachsen definierende Paare, wobei bei freiem Strahlengang die von einem Sender emittierten Sendelichtstrahlen auf den zugeordneten Empfänger treffen, und wobei bei einer durch einen Objekteingriff bedingten Unterbrechung wenigstens einer Strahlachse ein Objektfeststellungssignal generierbar ist. Zur Justierung der Strahlachsen der Sendereinheit sind in vorgegebenen Sollpositionen relativ zu dem Sender wenigstens zwei sichtbare Richtstrahlen emittierende Sendeelemente vorgesehen, welche jeweils auf eine Zielmarke an der Empfängereinheit ausrichtbar sind.

Die DE 20 2019 106 396 U1 betrifft eine Lichtschrankenanordnung mit einer Sendereinheit und einer Empfängereinheit, wobei die Sendereinheit mehrere Sendelichtstrahlen emittierende Sender und die Empfängereinheit mehrere Sendelichtstrahlen empfangende Empfänger aufweist, und mit einer Ausrichteinheit zur Ausrichtung der Sendereinheit und Empfängereinheit. Die Ausrichteinheit weist eine Anordnung von Anzeigeelementen auf, die mittels einer Schiebekette gesteuert werden.

In der DE 10 2006 050 189 A1 Lichtgitter mit einer Sendeeinheit und einer Empfangseinheit, wobei die Sendeeinheit eine Vielzahl von Lichtsendern und einen Ausrichtlichtsender aufweist, wobei jedem Lichtsender ein Lichtempfänger der Empfangseinheit zugeordnet ist, der auf von einem Lichtsender ausgesandtes Gitterlicht anspricht, wenn der Lichtempfänger innerhalb eines ersten Abstrahlwinkels zu dem Lichtsender und der Lichtsender innerhalb eines ersten Sichtwinkels zu dem Lichtempfänger ausgerichtet ist, dadurch gekennzeichnet, dass die Empfangseinheit einen Ausrichtlichtempfänger aufweist, der auf Ausrichtlicht anspricht, wenn der Ausrichtlichtempfänger innerhalb eines zweiten Abstrahlwinkels zu dem Ausrichtlichtsender und der Ausrichtlichtsender innerhalb eines zweiten Sichtwinkels zu dem Ausrichtlichtempfänger ausgerichtet ist, wobei der zweite Abstrahlwinkel größer als der erste Abstrahlwinkel und/oder der zweite Sichtwinkel größer als der erste Sichtwinkel ist und wobei Ausrichtlichtlichtsender und Ausrichtlichtempfänger von einer Steuerung des Lichtgitters im Betrieb unberücksichtigt bleiben.

Der Erfindung liegt die Aufgabe zugrunde, eine einfache, sichere und kostengünstige Justagemöglichkeit für einen Lichtvorhang der eingangs genannten Art bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich. Der Lichtvorhang umfasst ein sendeseitiges Gehäuse an einem ersten Rand des Überwachungsbereichs, in welchem eine Anordnung von Lichtstrahlen emittierenden Sendern vorgesehen ist, und ein empfangsseitiges Gehäuse an einem zweiten Rand des Überwachungsbereichs, in welchem eine Anordnung von Empfängern vorgesehen ist. Bei freiem Überwachungsbereich treffen die Lichtstrahlen der Sender auf diesen zugeordnete Empfänger auf, wobei ein Objekt im Überwachungsbereich die Lichtstrahlen wenigstens eines Senders unterbricht. Weiterhin umfasst der Lichtvorhang eine Auswerteeinheit, in welcher in Abhängigkeit von Empfangssignalen der Empfänger ein Objektfeststellungssignal generiert wird. In einem Gehäuse ist eine Anordnung von Ausrichtlichtstrahlen emittierenden Ausrichtsendern vorgesehen. Die Strahlcharakteristiken wenigstens eines Teils der Ausrichtlichtstrahlen sind von den Strahlcharakteristiken der Lichtstrahlen verschieden. Weiterhin sind Auswertemittel vorgesehen, in welchen anhand von auf den Ausrichtempfängern auftreffenden Lichtmengen von Ausrichtlichtstrahlen die Ausrichtgüte des Lichtvorhangs ermittelt wird. Die einzelnen Ausrichtlichtstrahlen sind dadurch unterscheidbar, dass den Ausrichtlichtstrahlen individuelle Kodierungen aufgeprägt sind, und/oder dass die Ausrichtlichtstrahlen einzeln in unterschiedlichen Zeitintervallen emittiert werden. Dessen Justage erfolgt während eines Ausrichtbetriebs. Den Ausrichtlichtstrahlen sind Kodierungen in Form von Pulsfolgen aufgeprägt, wobei die Pulse der Pulsfolgen im Lauf des Ausrichtbetriebs verändert werden, wobei insbesondere die Veränderung der Pulse der Pulsfolgen der Ausrichtlichtstrahlen abhängig vom aktuellen Ergebnis der Ausrichtung des Lichtvorhangs erfolgt. Der Ausrichtbetrieb ist sendeseitig einstellbar, wobei diese Einstellung über Kodierungen in Lichtstrahlen und/oder Ausrichtlichtstrahlen übertragen wird. Anhand der erfassten Kodierungen wechselt die Auswerteeinheit in einen Ausrichtmodus, dass durch Auswertung von Empfangspegeln von Ausrichtempfängern Winkelfehler und/oder Verschiebefehler der Ausrichtung des sendeseitigen Gehäuses relativ zum empfangsseitigen Gehäuse ermittelt. Die Auswertung der Empfangspegel erfolgt selektiv für unterschiedliche Ausrichtlichtstrahlen, und/oder durch Auswertung von Empfangspegeln werden benachbarter Ausrichtempfänger Zwischenwerte für Winkel- und/oder Verschiebefehler berechnet.

Der Grundgedanke der Erfindung besteht somit darin, in einem der Gehäuse des Lichtvorhangs Ausrichtsender und im anderen Gehäuse des Lichtvorhangs Ausrichtempfänger anzuordnen. Wesentlich hierbei ist, dass die von den Ausrichtsendern emittierten Ausrichtlichtstrahlen Strahlcharakteristiken aufweisen, von denen sich zumindest einige von den Strahlcharakteristiken der Lichtstrahlen der Sender unterscheiden. Die so ausgebildeten Ausrichtlichtstrahlen generieren an den Ausrichtempfänger Ausgangssignale, anhand derer mit den Auswertemitteln ein Maß für die Ausrichtgüte ermittelt werden kann. Insbesondere können anhand der Ausgangssignale der Ausrichtempfänger in den Ausrichtmitteln Winkel- beziehungsweise Verschiebefehler der Gehäuse relativ zueinander ermittelt werden, was dem Benutzer vorteilhaft in geeigneter Weise signalisiert werden, so dass die Justage des Lichtvorhangs schnell und präzise durchgeführt werden kann.

Gemäß einer vorteilhaften Ausführungsform sind Ausrichtsender vorgesehen, die gegenüber den Lichtstrahlen unterschiedliche Strahlrichtungen aufweisen.

Die Lichtstrahlen der Sender spannen durch die Reihenanordnung der Sender einen in einer Ebene liegenden Überwachungsbereich auf. Bereits bei kleinen Verschiebungen oder Verdrehungen treffen die Lichtstrahlen nicht mehr auf die zugeordneten Empfänger, zumal die Lichtstrahlen typischerweise in kleinen Abstrahlwinkeln abgestrahlt werden und die Empfänger kleine Öffnungswinkel aufweisen.

Da im Gegensatz hierzu die Ausrichtsender ihre Ausrichtlichtstrahlen in unterschiedlichen Richtungen abstrahlen ist gewährleistet, dass auch bei Verschiebungen oder Verdrehungen der Sendereinheit relativ zur Empfängereinheit einige der Ausrichtlichtstrahlen zumindest teilweise auf zugeordnete Ausrichtempfänger treffen, so dass anhand deren Ausgangssignale die Ausrichtgüte beziehungsweise die vorliegenden Winkel- beziehungsweise Verschiebefehler ermittelt werden können.

Die Abstrahlwinkel der Ausrichtlichtstrahlen können dabei prinzipiell gleich wie die Abstrahlwinkel dimensioniert sein.

Besonders vorteilhaft sind Ausrichtsender vorgesehen, die gegenüber den Lichtstrahlen unterschiedliche Abstrahlwinkel aufweisen.

Durch die Größen der Abstrahlwinkel kann der Ausrichtbereich für die Justage des Lichtvorhangs vorgegeben werden. Insbesondere kann durch größere Abstrahlwinkel der Ausrichtbereich vergrößert werden.

Gemäß einer vorteilhaften Ausführungsform sind die Ausrichtsender im sendeseitigen Gehäuse und die Ausrichtempfänger im empfangsseitigen Gehäuse integriert.

In diesem Fall kann wenigstens ein Teil der Ausrichtempfänger von Empfängern gebildet sein.

Dadurch kann der Aufbau des Lichtvorhangs vereinfacht werden.

Prinzipiell können die Ausrichtsender über die gesamte Höhe des Gehäuses der Sender- oder Empfängereinheit verteilt sein und sich in die Reihenanordnung der Sender- beziehungsweise Empfänger eingliedern. Entsprechendes gilt für die Ausrichtempfänger.

Gemäß einer vorteilhaften Ausführungsform sind mehrere Ausrichtlichtstrahlen über wenigstens ein gemeinsames Optikelement geführt.

Die Ausrichtsender, die diese Ausrichtlichtstrahlen emittieren bilden mit dem Optikelement eine kompakte Funktionseinheit zur Ausrichtung des Lichtvorhangs, die lokal am jeweiligen Gehäuse des Lichtvorhangs angeordnet sein kann.

Dabei kann ein sende- und/oder empfangsseitiges Optikelement vorgesehen sein.

Zweckmäßig ist als Optikelement ein Tubus und/oder eine Linse und/oder eine Blende vorgesehen.

Dabei können die Ausrichtsender eine Reihen-, Kreuz-, Zeilen- oder Matrixanordnung bilden.

Die Ausrichtsender können auf einem gemeinsamen Substrat wie einer Leiterplatte angeordnet sein und eine kompakte Baueinheit bilden.

Ebenso können die Ausrichtempfänger eine Reihen-, Kreuz-, Zeilen- oder Matrixanordnung bilden.

Auch diese können auf einem gemeinsamen Substrat angeordnet sein.

Alternativ kann auch ein einzelner Ausrichtempfänger vorgesehen sein.

Erfindungsgemäß sind die einzelnen Ausrichtlichtstrahlen dadurch unterscheidbar, dass den Ausrichtlichtstrahlen individuelle Kodierungen aufgeprägt sind, und/oder dass die Ausrichtlichtstrahlen einzeln in unterschiedlichen Zeitintervallen emittiert werden.

Durch diese Unterscheidbarkeit können die einzelnen Ausrichtlichtstrahlen und die dadurch in Ausrichtempfängern generierten Ausgangssignale relativ zur Bestimmung der Ausrichtgüte und auch zur Bestimmung von Winkel- und Verschiebefehlern herangezogen werden.

Erfindungsgemäß erfolgt die Justage des Lichtvorhangs während eines Ausrichtbetriebs.

Damit ist die Justage auf definierte Phasen des Betriebs des Lichtvorhangs begrenzt und insbesondere von dem Überwachungsbetrieb, in welchem Objekte im Überwachungsbereich erfasst werden, getrennt.

Dabei können die Ausrichtlichtstrahlen dauerhaft oder nur während des Ausrichtbetriebs emittiert werden.

Erfindungsgemäß sind den Ausrichtlichtstrahlen Kodierungen in Form von Pulsfolgen aufgeprägt, wobei die Pulse der Pulsfolgen im Lauf des Ausrichtbetriebs verändert werden.

Insbesondere kann die Veränderung der Pulse der Pulsfolgen der Ausrichtlichtstrahlen abhängig vom aktuellen Ergebnis der Ausrichtung des Lichtvorhangs erfolgen.

Insbesondere durch die Variation der Pulsdauern der Pulse kann die Empfindlichkeit und Reichweite der Ausrichtlichtstrahlen für die Justage geändert werden. Durch eine Verlängerung der Pulsdauern wird die Empfindlichkeit erhöht.

Des Weiteren kann während des Ausrichtvorgangs durch die Ausrichtlichtstrahlen der Winkelbereich für die Justage des Lichtvorhangs in einem größeren Bereich als ohne Ausrichtstrahlen ermöglicht werden.

Im einfachsten Fall wird der Ausrichtbetrieb selbsttätig bei Einschalten des Lichtvorhangs aktiviert, das heißt gestartet.

Weiterhin kann die Aktivierung des Ausrichtbetriebs mittels sendeseitiger und/oder empfangsseitiger Schaltmittel erfolgen.

Dann kann ein Benutzer durch Betätigen der Schaltmittel selbst vorgeben, wann ein Ausrichtbetrieb gestartet wird.

Vorteilhaft wird der Ausrichtbetrieb selbsttätig aktiviert, wenn mit den Auswertemitteln eine unzureichende Ausrichtung des Lichtvorhangs festgestellt wird.

Damit wird eine adaptive, an sich ändernde Randbedingungen angepasste Justage des Lichtvorhangs gewährleistet.

Weiterhin ist es möglich, dass der Ausrichtbetrieb aktiviert wird, wenn vorgegebene Kodierungen in Lichtstrahlen oder Ausrichtlichtstrahlen erkannt werden.

Damit kann durch eine Steuerung des Senderbetriebs der Ausrichtbetrieb initiiert werden.

Gemäß einer ersten vorteilhaften Ausgestaltung wird der Ausrichtbetrieb nach Ablauf eines vorgegebenen Zeitintervalls beendet.

Damit ist der Ausrichtbetrieb für eine fest vorgegebene Zeitspanne aktiviert.

Gemäß einer zweiten vorteilhaften Ausgestaltung wird der Ausrichtbetrieb beendet, wenn eine vorgegebene Ausrichtgüte des Lichtvorhangs erreicht ist. In diesem Fall wird der Ausrichtbetrieb selbsttätig erst dann beendet, wenn die Justage des Lichtvorhangs erfolgreich abgeschlossen ist.

Erfindungsgemäß ist der Ausrichtbetrieb sendeseitig einstellbar, wobei diese Einstellung über Kodierungen in Lichtstrahlen und/oder Ausrichtlichtstrahlen übertragen wird, und wobei anhand der erfassten Kodierungen die Auswerteeinheit in einen Ausrichtmodus wechselt.

Erfindungsgemäß werden durch Auswertung von Empfangspegeln von Ausrichtempfängern Winkelfehler und/oder Verschiebefehler der Ausrichtung des sendeseitigen Gehäuses relativ zum empfangsseitigen Gehäuse ermittelt.

Durch eine Bewertung der Empfangspegel können eventuelle Winkel- und Verschiebefehler quantitativ bestimmt werden.

Besonders vorteilhaft werden durch Auswertung von Empfangspegeln benachbarter Ausrichtempfänger Zwischenwerte für Winkel- und/oder Verschiebefehler berechnet.

Durch die so durchgeführten Interpolationen können über die gesamten Höhen der Gehäuse kontinuierliche, ortsaufgelöste Werte für die Winkel- und Verschiebefehler abgeleitet werden.

Dabei ist es besonders vorteilhaft, wenn die Auswertung der Empfangspegel selektiv für unterschiedliche Ausrichtlichtstrahlen erfolgt.

Dadurch wird die Ortsauflösung der Messungen und damit die Genauigkeit der Bestimmung der Winkel- und Verschiebefehler erhöht.

Gemäß einer vorteilhaften Ausführungsform sind Anzeigemittel vorgesehen, mittels derer die Ausrichtgüte angezeigt wird.

Insbesondere werden mit den Anzeigemitteln spezifische Fehlstellungen angezeigt.

Die Anzeigemittel sind generell als optische Anzeigemittel, beispielsweise in Form von sichtbarem Licht emittierenden Leuchtdioden oder Leuchtdiodenfeldern gebildet.

Um Fehlstellungen wie Winkel- oder Verschiebefehler ortsaufgelöst anzuzeigen, sind die Anzeigemittel vorteilhaft von einer Mehrfachanordnung von Anzeigeelementen gebildet, die sich über die gesamte Höhe eines Gehäuses des Lichtvorhangs erstrecken können.

Dabei können die Anzeigemittel an einer Außenseite des sendeseitigen und/oder empfangsseitigen Gehäuses vorgesehen sein.

Gemäß einer konstruktiv vorteilhaften Ausführungsform sind die Sender und Ausrichtsender einerseits und die Empfänger und Ausrichtempfänger jeweils über dieselben Ansteuermittel angesteuert, wobei nur die Sender und Empfänger zur Objektdetektion herangezogen werden.

Insbesondere werden die Sender und Ausrichtsender über eine Schiebekette gemeinsam angesteuert, und die Empfänger und Ausrichtempfänger werden über eine Schiebekette gemeinsam angesteuert.

Da somit dieselben Ansteuermittel sowohl für die Sender und Ausrichtsender als auch für die Empfänger und Ausrichtempfänger genutzt werden, kann diese Ansteuerung mit nur wenig Bauelementen realisiert werden.

Der konstruktive Aufwand kann noch weiter dadurch reduziert werden, dass die Anzeigemittel Anzeigeelemente aufweisen, die mit den Empfängern und Ausrichtempfängern mittels derselben Schiebekette angesteuert werden.

Gemäß einer vorteilhaften Ausgestaltung ist der Lichtvorhang als Sicherheitssensor ausgebildet und kann im Bereich der Sicherheitstechnik, insbesondere im Bereich des Personenschutzes eingesetzt werden. Hierzu weist der Sicherheitssensor einen fehlersicheren Aufbau auf. Dieser kann insbesondere durch eine zweikanalige Auswerteeinheit in Form zweier sich zyklisch gegenseitig überwachender Rechnereinheiten ausgebildet sein.

Vorteilhaft weist der als Sicherheitssensor ausgebildete Lichtvorhang Sicherheitsausgänge auf, wobei abhängig von Schaltzuständen der Sicherheitsausgänge eine Anlage gesteuert ist.

Von der Anlage können Gefahren für Personen ausgehen. Mit dem Lichtvorhang wird ein Gefahrenbereich an der Anlage überwacht. Die Sicherheitsausgänge sind fehlersicher ausgebildet, wobei diese hierzu vorteilhaft zweikanalig ausgebildet sind.

Der Lichtvorhang arbeitet derart, dass in dessen Überwachungsbetrieb die Sicherheitsausgänge eingeschaltet sind und dadurch der Betrieb der Anlage freigegeben ist, wenn im Überwachungsbereich kein Objekt detektiert wird. Die Sicherheitsausgänge sind ausgeschaltet und der Betrieb der Anlage ist stillgesetzt, wenn im Überwachungsbereich ein Objekt detektiert wird. Im Ausrichtbetrieb sind unabhängig davon, ob ein Objekt im Überwachungsbereich detektiert wird oder nicht, die Sicherheitsausgänge ausgeschaltet.

Damit ist gewährleistet, dass sich die Anlage in einem sicheren Zustand, in dem keine Gefahren für Personen von der Anlage ausgehen können, befindet, während der Lichtvorhang im Ausrichtbetrieb ist und daher seine Überwachungsfunktion nicht wahrnehmen kann.

Die Erfindung wird im Folgenden anhand der Zeichnungen erläutert. Es zeigen:
- Figur 1:: Ausführungsbeispiel des erfindungsgemäßen Lichtvorhangs.
- Figur 2a:: Erste Anordnung von Ausrichtsendern mit einem zugeordneten Optikelement für den Lichtvorhang gemäß Figur 1.
- Figur 2b:: Draufsicht auf die Anordnung von Ausrichtsendern gemäß Figur 2a.
- Figur 3a:: Zweite Anordnung von Ausrichtsendern mit einem zugeordneten Optikelement für den Lichtvorhang gemäß Figur 1.
- Figur 3b:: Draufsicht auf die Anordnung von Ausrichtsendern gemäß Figur 3a.
- Figur 4a:: Dritte Anordnung von Ausrichtsendern mit einem zugeordneten Optikelement für den Lichtvorhang gemäß Figur 1.
- Figur 4b:: Draufsicht auf die Anordnung von Ausrichtsendern gemäß Figur 4a.
- Figur 5a:: Vierte Anordnung von Ausrichtsendern mit einem zugeordneten Optikelement für den Lichtvorhang gemäß Figur 1.
- Figur 5b:: Draufsicht auf die Anordnung von Ausrichtsendern gemäß Figur 5a.
- Figur 6:: Fünfte Anordnung von Ausrichtsendern mit einem zugeordneten Optikelement für den Lichtvorhang gemäß Figur 1.
- Figur 7:: Sechste Anordnung von Ausrichtsendern für den Lichtvorhang gemäß Figur 1.
- Figur 8:: Siebte Anordnung von Ausrichtsendern für den Lichtvorhang gemäß Figur 1.
- Figur 9a:: Ausführungsbeispiel des Lichtvorhangs gemäß Figur 1 mit einer Anordnung von Ausrichtsendern.
- Figur 9b:: Sendereinheit des Lichtvorhangs gemäß Figur 9a in einer Draufsicht von oben.
- Figur 10:: Weiteres Ausführungsbeispiel des Lichtvorhangs gemäß Figur 1 mit einer Anordnung von Ausrichtsendern.
- Figur 11:: Weiteres Ausführungsbeispiel des Lichtvorhangs gemäß Figur 1 mit einer Anordnung von Ausrichtsendern.
- Figur 12:: Schaltungsanordnung zur Anordnung von Empfängern, Ausrichtempfängern und Anzeigeelementen für den Lichtvorhang gemäß Figur 1.

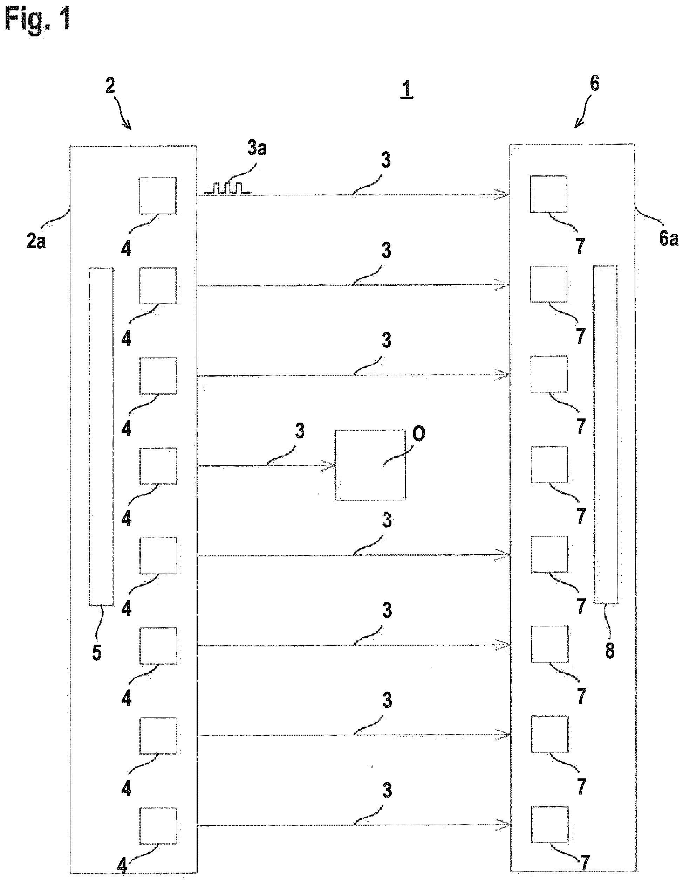

Figur 1 zeigt schematisch ein Ausführungsbeispiel des erfindungsgemäßen Lichtvorhangs 1.

Der Lichtvorhang 1 dient zur Objekterfassung in einem Überwachungsbereich. Der Lichtvorhang 1 weist eine Sendereinheit 2 mit einem sendeseitigen Gehäuse 2a auf, in welchem eine Reihenanordnung von Lichtstrahlen 3 emittierenden Sendern 4 vorgesehen ist. Die Sender 4, die von Leuchtdioden oder dergleichen gebildet sind, emittieren Lichtstrahlen 3 in Form von Lichtimpulsen 3a im Infrarotbereich, wie für den ersten Sender 4 in Figur 1 schematisch dargestellt. Die Sender 4 werden von einer Sendersteuerung 5 gesteuert.

Der Lichtvorhang 1 weist weiterhin eine Empfängereinheit 6 auf, in deren empfangsseitigen Gehäuse 6a eine Reihenanordnung von Empfängern 7 in Form von Fotodioden oder dergleichen sowie eine Auswerteeinheit 8 integriert ist.

Die Sendereinheit 2 und die Empfängereinheit 6 sind an gegenüberliegenden Rändern des Überwachungsbereichs so angeordnet, dass bei freiem Überwachungsbereich die Lichtstrahlen 3 eines Senders 4 auf den zugeordneten gegenüberliegenden Empfänger 7 treffen, wie in Figur 1 dargestellt. Jeder Sender 4 bildet mit dem zugeordneten Empfänger 7 ein Sender-Empfänger-Paar. Die Sender-Empfänger-Paare werden in bekannter Weise über eine optische Synchronisierung zyklisch einzeln nacheinander aktiviert. Im vorliegenden Fall sind acht Sender-Empfänger-Paare vorgesehen. Natürlich kann ein Lichtvorhang 1 auch eine andere Anzahl von Sender-Empfänger-Paaren aufweisen. Ebenso kann eine elektrische, insbesondere leitungsgebundene Verbindung zwischen der Sendereinheit 2 und Empfängereinheit 6 vorgesehen sein.

Objekte im Überwachungsbereich werden dadurch erfasst, dass der Strahlengang der Lichtstrahlen 3 wenigstens eines Sender-Empfänger-Paars unterbrochen wird. In Figur 1 ist ein Objekt mit "O" bezeichnet.

In der Auswerteeinheit 8 wird in Abhängigkeit der Empfangssignale ein Objektfeststellungssignal generiert, das über Ausgänge ausgegeben wird. Im vorliegenden Fall ist das Objektfeststellungssignal als binäres Schaltsignal generiert, dessen Schaltzustände angeben, ob sich ein Objekt im Überwachungsbereich befindet oder nicht.

Der Lichtvorhang 1 ist im vorliegenden Fall als Sicherheitssensor ausgebildet und weist demzufolge einen fehlersicheren Aufbau auf. Hierzu weist die Auswerteeinheit 8 einen zweikanaligen Aufbau in Form zweier sich zyklisch überwachenden Rechnereinheiten auf. Zudem sind die Ausgänge als fehlersichere, zweikanalige Sicherheitsausgänge ausgebildet.

Die Arbeitsweise des Lichtvorhangs 1 ist derart, dass in dessen Überwachungsbetrieb die Sicherheitsausgänge eingeschaltet sind und dadurch der Betrieb der Anlage freigegeben ist, wenn im Überwachungsbereich kein Objekt detektiert wird. Die Sicherheitsausgänge sind ausgeschaltet und dadurch der Betrieb der Anlage stillgesetzt, wenn im Überwachungsbereich ein Objekt detektiert wird.

Weiterhin kann der Lichtvorhang 1 in einem Ausrichtbetrieb betrieben werden, in dem die Sendereinheit 2 und die Empfängereinheit 6 relativ zueinander ausgerichtet werden. Im Ausrichtbetrieb sind unabhängig davon, ob ein Objekt im Überwachungsbereich detektiert wird oder nicht, die Sicherheitsausgänge ausgeschaltet.

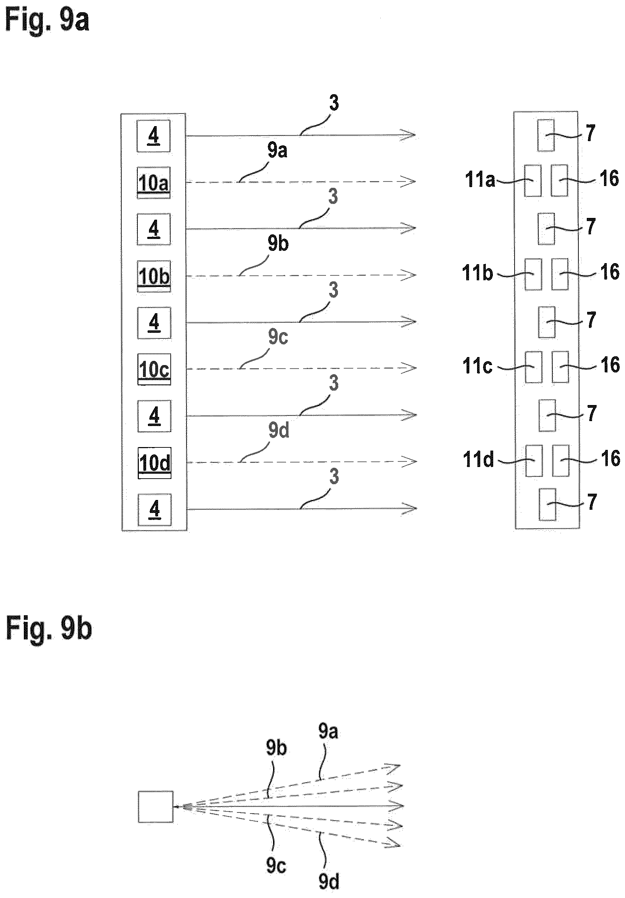

Zur Justage des Lichtvorhangs 1 sind in einem Gehäuse 2a, 6a des Lichtvorhangs 1 Ausrichtlichtstrahlen 9, 9a - 9e, emittierende Ausrichtsender 10, 10a - 10e und im anderen Gehäuse 6a, 2a zugeordnete Ausrichtempfänger 11, 11a - 11e vorgesehen (die beispielhaft in den Figuren 9 bis 11 dargestellt sind).

In den nachfolgenden Ausführungsbeispielen befinden sich die Ausrichtsender 10, 10a - 10e im sendeseitigen Gehäuse 2a und die Ausrichtempfänger 11, 11a-11e im empfangsseitigen Gehäuse 6a, was jedoch nicht zwingend ist. Die Ausrichtsender 10, 10a - 10e können von Leuchtdioden, die Ausrichtempfänger 11, 11a - 11e von Photodioden gebildet sein. Generell können auch Empfänger 7 als Ausrichtempfänger 11, 11a - 11d genutzt werden.

Die Ausrichtsender 10, 10a - 10e können während des gesamten Betriebs oder nur während des Ausrichtbetriebs aktiviert sein. Alternativ können die Ausrichtsender 10, 10a - 10e während des gesamten Betriebs des Lichtvorhangs 1 aktiviert sein. Die Ausrichtlichtstrahlen 9, 9a - 9e werden nur zur Justage des Lichtvorhangs 1 verwendet, nicht jedoch zur Erfassung von Objekten im Überwachungsbereich.

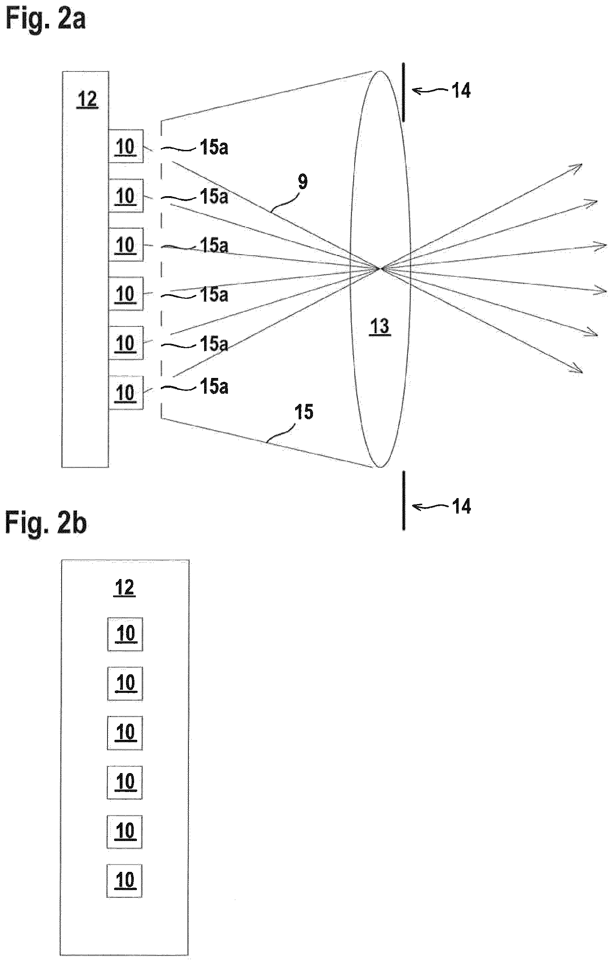

Die Figuren 2a, 2b zeigen eine erste Anordnung von Ausrichtsendern 10, die im vorliegenden Fall auf einer gemeinsamen Leiterplatte 12 platziert sind.

Die Ausrichtsender 10 senden Ausrichtlichtstrahlen 9 in verschiedenen Abstrahlrichtungen aus. Die Abstrahlwinkel der Ausrichtlichtstrahlen 9 können gleich oder unterschiedlich sein. Die Ausrichtlichtstrahlen 9 werden über ein gemeinsames Optikelement geführt, das im vorliegenden Fall von einer Linse 13 und einer Blende 14 gebildet ist. Diese Elemente befinden sich in einem Tubus 15 mit mehreren Einzelblenden 15a. Auch der Tubus 15 ist Bestandteil des Optikelements. Empfangsseitig kann eine entsprechende Anordnung von Ausrichtempfängern 11 mit einem vorgeordneten Optikelement vorgesehen sein. Solche Empfangsanordnungen für Ausrichtempfänger 11 können auch für die beispielhaften Senderanordnungen der Ausrichtsender 10 gemäß den Figuren 2a, 2b, 3a, 3b, 4a, 4b, 5a, 5b, 6, 7, 8 vorgesehen sein und auch mit Blenden 14 und Linsen 13 versehen sein. Die Empfangsrichtungen sind dann entgegengesetzt zu den gezeigten Sendestrahlen der Senderanordnungen. Generell kann auch nur ein Ausrichtempfänger 11 mit vorgeordnetem Optikelement vorgesehen sein.

Vorteilhaft ist vorgesehen, dass die einzelnen Ausrichtlichtstrahlen 9 dadurch unterscheidbar sind, dass den Ausrichtlichtstrahlen 9 individuelle Kodierungen aufgeprägt sind, und/oder dass die Ausrichtlichtstrahlen 9 einzeln in unterschiedlichen Zeitintervallen emittiert werden.

Damit können die einzelnen Ausrichtlichtstrahlen 9 eindeutig identifiziert werden. In Auswertemitteln, die vorteilhaft in der Auswerteeinheit 8 integriert sind, werden durch Auswertung der Ausgangssignale, das heißt Empfangspegel der Ausrichtempfänger 11 eventuelle Fehlstellungen der Gehäuse 2a, 6a, insbesondere Verdrehungen oder Verschiebungen relativ zueinander ermittelt und daraus die Ausrichtgüte.

Diese Kenndaten werden über geeignete Anzeigemittel an der Außenseite des Gehäuses 2a, 6a angezeigt, so dass ein Benutzer den Lichtvorhang 1 justieren kann.

Vorteilhaft sind den Ausrichtlichtstrahlen 9 Kodierungen in Form von Pulsfolgen aufgeprägt, wobei die Pulse der Pulsfolgen im Lauf des Ausrichtbetriebs verändert werden.

Insbesondere erfolgt die Veränderung der Pulse der Pulsfolgen der Ausrichtlichtstrahlen 9 abhängig vom aktuellen Ergebnis der Ausrichtung des Lichtvorhangs 1.

Dadurch kann die Empfindlichkeit der Ausrichtung optimiert werden.

Die Ausrichtsender 10 gemäß den Figuren 2a, 2b bilden eine lineare Reihenanordnung, die sich in Längsrichtung des Gehäuses 2a erstreckt. Dementsprechend können mit dieser Anordnung nur Fehlausrichtungen in einer Raumrichtung festgestellt und korrigiert werden.

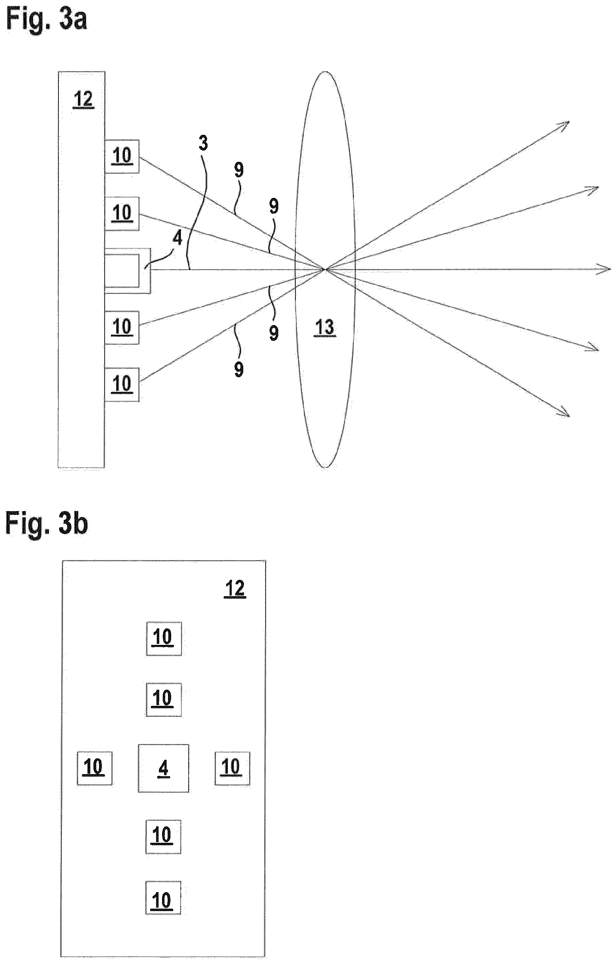

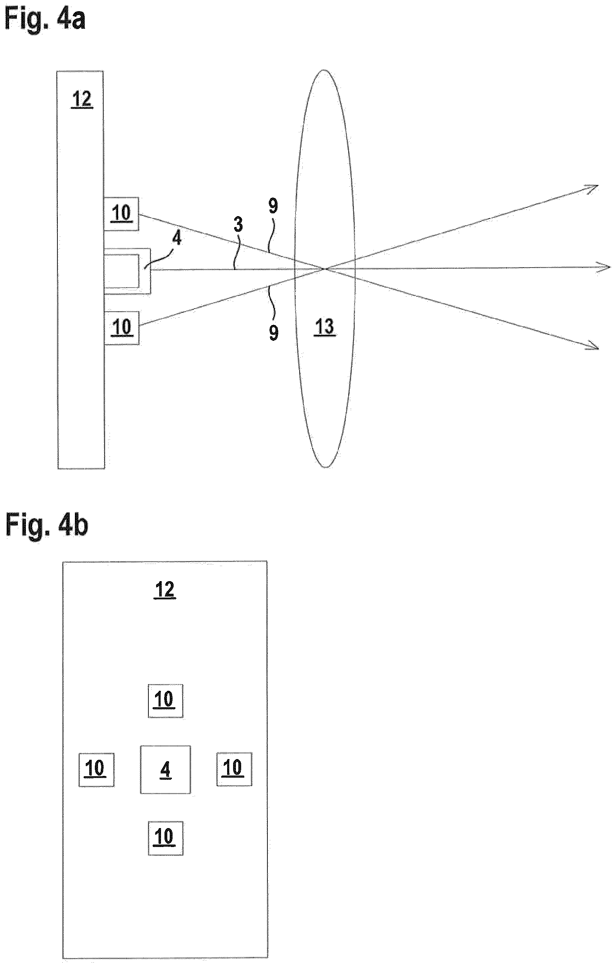

Die Figuren 3a, 3b und 4a, 4b zeigen kreuzförmige Anordnungen von Ausrichtsendern 10, wobei im Mittelpunkt der jeweiligen Auswertung ein Sender 4 vorgesehen ist. Der Anordnung der Sender 4 ist jeweils ein Optikelement zugeordnet, das nur von einer Linse 13 gebildet ist.

Mit diesen Anordnungen ist eine Ausrichtung des Lichtvorhangs 1 in zwei Raumrichtungen möglich.

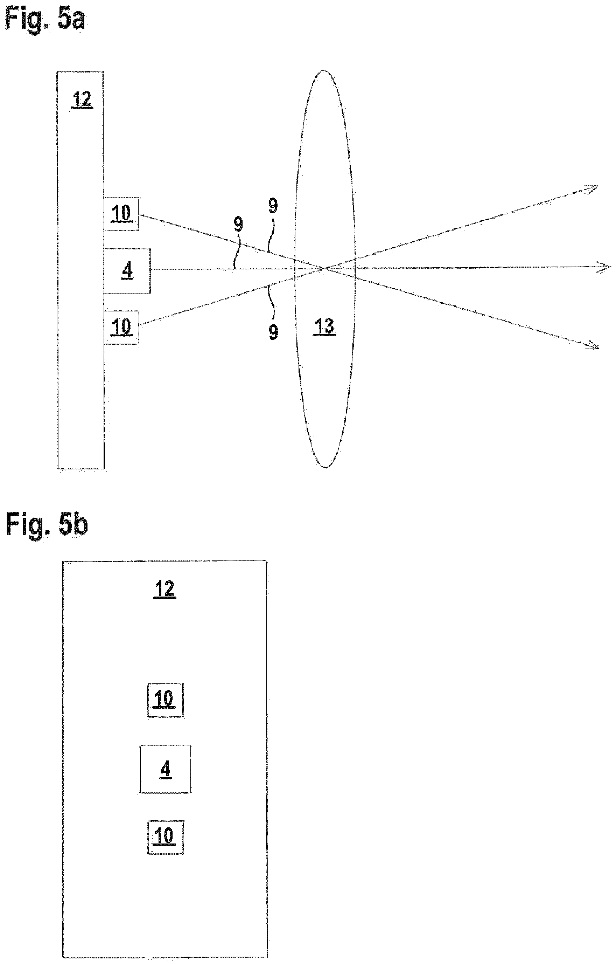

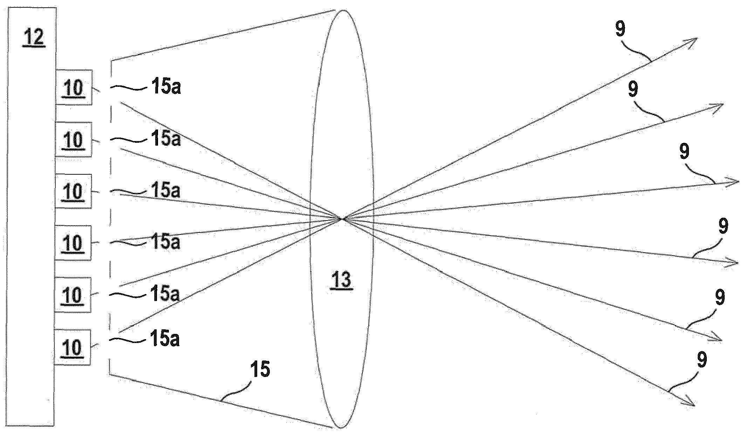

Die Figuren 5a, 5b und Figur 6 zeigen weitere Linsenanordnungen von Ausrichtsendern 10, denen als Optikelement nur eine Linse 13 zugeordnet ist. Die Anordnung gemäß den Figuren 5a, 5b umfasst nur zwei Ausrichtsender 10, die beidseits eines Senders 4 liegen. Die Anordnungen können sich in Längs- und Querrichtung des Gehäuses 2a erstrecken.

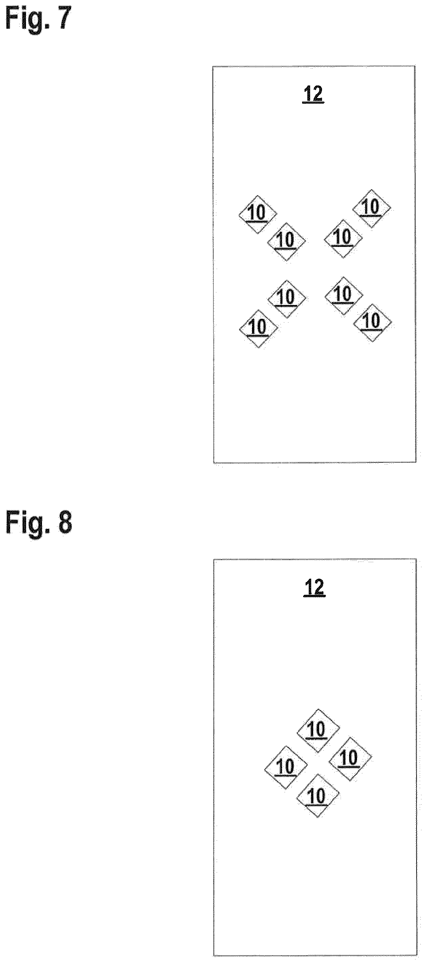

Die Figuren 7, 8 zeigen weitere Anordnungen von Ausrichtsendern.

Der Ausrichtbetrieb kann selbsttätig bei Einschalten des Lichtvorhangs 1 aktiviert, das heißt gestartet werden.

Weiterhin kann der Ausrichtbetrieb selbsttätig aktiviert werden, wenn mit den Auswertemitteln eine unzureichende Ausrichtung des Lichtvorhangs 1 festgestellt wird.

Weiterhin kann die Aktivierung des Ausrichtbetriebs mittels sendeseitiger und/oder empfangsseitiger Schaltmittel erfolgen.

Schließlich kann der Ausrichtbetrieb aktiviert werden, wenn vorgegebene Kodierungen in Lichtstrahlen 3 oder Ausrichtlichtstrahlen 9 erkannt werden.

Der Ausrichtbetrieb kann nach Ablauf eines vorgegebenen Zeitintervalls beendet werden.

Alternativ wird der Ausrichtbetrieb nach Ablauf eines vorgegebenen Zeitintervalls beendet oder der Ausrichtbetrieb wird beendet, wenn eine vorgegebene Ausrichtgüte des Lichtvorhangs 1 erreicht ist.

Vorteilhaft steuert die Auswerteeinheit 8 den Ausrichtbetrieb. Auch die Sendersteuerung 5 kann den Ausrichtbetrieb steuern.

Beispielsweise ist es möglich, dass der Ausrichtbetrieb sendeseitig einstellbar ist, dass diese Einstellung über Kodierungen in Lichtstrahlen 3 und/oder Ausrichtlichtstrahlen 9 übertragen werden, und dass anhand der erfassten Kodierungen die Auswerteeinheit 8 in einen Ausrichtmodus wechselt.

Die Figuren 9a, 9b zeigen ein Ausführungsbeispiel des Lichtvorhangs 1 bei dem im Gehäuse 2a eine alternierende Folge von Sendern 4 und Ausrichtsendern 10a - 10d vorgesehen ist. Entsprechend ist im Gehäuse 6a eine alternierende Folge von Empfängern 7 und Ausrichtempfängern 11a - 11d vorgesehen, so dass bei ausgerichtetem Lichtvorhang 1 jedem Sender 4 ein Empfänger 7 und jedem Ausrichtsender 10a - 10d ein Ausrichtempfänger 11a - 11d gegenüberliegt. Die Anzeigemittel sind von einzelnen Anzeigeelementen 16 gebildet, wobei jedem Ausrichtempfänger 11a - 11d ein Anzeigeelement 16 zugeordnet ist und ein sichtbares optisches Signal abgibt, das abhängig von der auf den zugeordneten Ausrichtempfänger 11a - 11d auftreffenden Lichtmenge von spezifischen Ausrichtlichtstrahlen 9a - 9d ist und damit ein Maß für die Ausrichtgüte ist.

Die Ausrichtsender 10a - 10d senden wieder Ausrichtlichtstrahlen 9a - 9d mit unterschiedlichen, eindeutig in den Ausrichtempfängern 11a - 11d identifizierbaren Kodierungen aus.

Wie Figur 9b zeigt, strahlen die einzelnen Ausrichtsender 10a - 10d Ausrichtlichtstrahlen 9a - 9d in unterschiedlichen Abstrahlrichtungen aus, wobei diese in einer Ebene quer zur Längsrichtung des Gehäuses 2a versetzt sind.

Je nachdem wie stark die Längsachsen der Gehäuse 2a, 6a zueinander verdreht sind, treffen nur einige der Ausrichtlichtstrahlen 9a - 9d der Ausrichtsender 10a - 10d auf den jeweils zugehörigen Ausrichtempfänger 11a - 11d.

Daraus kann in der Auswerteeinheit 8 die Winkelverdrehung der Gehäuse 2a, 6a zueinander bestimmt und an den Anzeigeelementen 16a - 16c angezeigt werden.

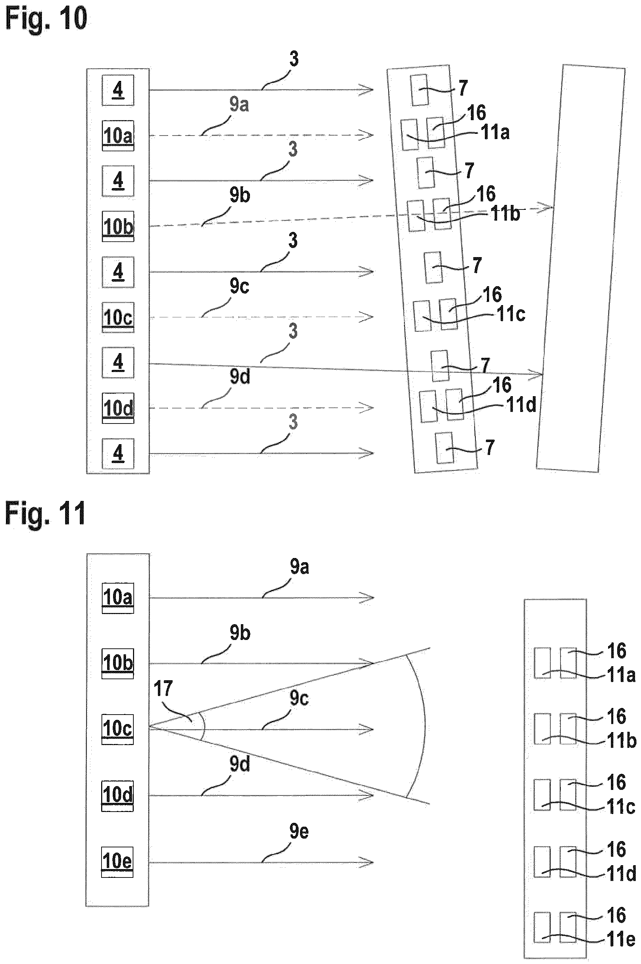

Figur 10 zeigt eine Variante des Lichtvorhangs 1 gemäß den Figuren 9a, 9b. In diesem Fall strahlen die Ausrichtsender 10a - 10d Ausrichtlichtstrahlen 9a - 9d ab, deren Abstrahlrichtungen in der Ebene des Überwachungsbereichs versetzt sind. Damit können Neigungen der Gehäuse 2a, 6a erfasst werden, was in Figur 10 für eine Neigung des Gehäuses 6a dargestellt ist.

Figur 11 zeigt eine weitere Variante des Lichtvorhangs 1. Dort sind nur die Ausrichtsender 10a - 10e und Ausrichtempfänger 11a - 11e mit den zugeordneten Anzeigeelementen 16 dargestellt, nicht jedoch die Sender 4 und Empfänger 7 des Lichtvorhangs 1. In diesem Fall verlaufen die Abstrahlrichtungen der Ausrichtlichtstrahlen 9a - 9e parallel zu den Strahlachsen der Lichtstrahlen 3 der Sender 4. Die Abstrahlwinkel, das heißt Öffnungswinkel 17, exemplarisch dargestellt für die Ausrichtlichtstrahlen 9c, sind gegenüber den Abstrahlwinkeln der Sender 4 vergrößert. Die Ausrichtlichtstrahlen 9a - 9e werden zyklisch einzeln nacheinander aktiviert, wobei diesem wieder individuelle Kodierungen aufgeprägt sein können.

Mit dieser Anordnung werden insbesondere Verschiebungen der Gehäuse 2a, 6a wie in Figur 11 dargestellt erfasst.

Figur 11 zeigt die Situation bei aktiviertem Ausrichtsender 10c. Durch die Ausrichtlichtstrahlen 9c des Ausrichtsenders 10c sind der Ausrichtempfänger 11b vollständig, der Ausrichtempfänger 11a teilweise, der Ausrichtempfänger 11c sehr wenig und die Ausrichtempfänger 11d, 11e überhaupt nicht beleuchtet.

Aus diesen Beleuchtungsmustern lässt sich der Grad der Verschiebung bestimmen, was mit den Anzeigeelementen 16 angezeigt wird.

Gemäß einer vorteilhaften Ausführungsform werden die Sender 4 und Ausrichtsender 10a - 10e einerseits und die Empfänger 7 und Ausrichtempfänger 11, 11a - 11e jeweils über gemeinsame Ansteuermittel angesteuert.

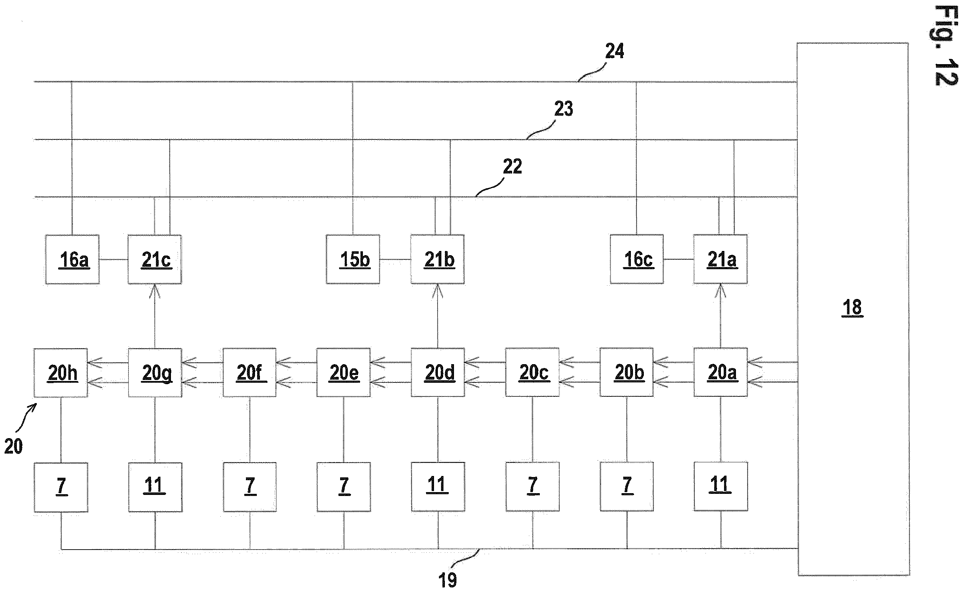

Ein Beispiel hierfür zeigt Figur 12.

Bei dieser Anordnung ist ein Controller 18 vorgesehen, der sowohl die Empfänger 7 als auch die Ausrichtempfänger 11 ansteuert, die hierzu über eine Leitung 19 mit dem Controller 18 verbunden sind. Auch die den Ausrichtempfängern 11a - 11c zugeordneten Anzeigeelement 16a - 16c werden über den Controller 18 gesteuert.

Der Controller 18 kann in der Auswerteeinheit 8 integriert sein.

Zur Ansteuerung der Empfänger 7 und der Ausrichtempfänger 11 ist eine Schiebekette 20 mit acht Schiebekettenelementen 20a - 20h vorgesehen, die zum Beispiel von Flipflops gebildet sind. Durch die Steuerung des Controllers 18 wird ein Bitwert zum Beispiel eine "1" durch die Schiebekettenelemente 20a - 20h durchgeschoben, wodurch die Empfänger 7 und die Ausrichtempfänger 11 einzeln nacheinander aktiviert werden.

Diese Schiebekette 20 wird auch zur Steuerung der Anzeigeelemente 16a - 16c verwendet. Jedem Anzeigeelement 16a - 16c ist ein Anzeigespeicherelement 21a - 21c zugeordnet, das von einem Flipflop gebildet ist. Durch Steuerleitungen 22, 23, 24 erfolgt über den Controller 18 die Steuerung und Adressierung derart, dass dann wenn über das Schiebekettenelement 20a das erste Anzeigespeicherelement 21a, über das Schiebekettenelement 20d das zweite Anzeigespeicherelement 21b und über das Schiebekettenelement 20g das dritte Anzeigespeicherelement 21c aktiviert wird.

In den Anzeigespeicherelementen 21a - 21c sind zudem Informationen gespeichert, in welcher Weise bei Aktivierung des jeweiligen Anzeigespeicherelements 21a - 21c das zugeordnete Anzeigeelement 16a - 16c sichtbares Licht mit einer bestimmten Blinksequenz emittiert, wobei die jeweilige Blinksequenz die aktuelle Ausrichtgüte signalisiert.

In einer alternativen Ausgestaltung kann der Informationswechsel der Anzeigeelemente 16a, 16b, 16c auch über eine der Steuerleitungen 22, 23, 24 durchgeführt werden.

In einer weiteren Ausgestaltung kann der Informationswechsel der Anzeigeelemente 16a, 16b, 16c und damit die Blinksequenz durch fortlaufende Änderung der Inhalte der Speicherelemente 21a - 21c über die Steuerleitungen 22, 23, 24 durchgeführt werden.

Eine entsprechende Ansteuerung ist sendeseitig vorgesehen, wobei hier die Sender 4 und Ausrichtsender 10 mit einer Schiebekette 20 gesteuert werden.

### Bezugszeichenliste

- (1): Lichtvorhang
- (2): Sendereinheit
- (2a): Gehäuse
- (3): Lichtstrahlen
- (3a): Lichtimpulse
- (4): Sender
- (5): Sendersteuerung
- (6): Empfängereinheit
- (6a): Gehäuse
- (7): Empfänger
- (8): Auswerteeinheit
- (9): Ausrichtlichtstrahl
- (9a - 9e): Ausrichtlichtstrahl
- (10): Ausrichtsender
- (10a - 10e): Ausrichtsender
- (11): Ausrichtempfänger
- (11a - 11e): Ausrichtempfänger
- (12): Leiterplatte
- (13): Linse
- (14): Blende
- (15): Tubus
- (15a): Einzelblenden
- (16): Anzeigeelement
- (16a - 16c): Anzeigeelement
- (17): Öffnungswinkel
- (18): Controller
- (19): Leitung
- (20): Schiebekette
- (20a - 20h): Schiebekettenelement
- (21a - 21c): Anzeigespeicherelement
- (22): Steuerleitung
- (23): Steuerleitung
- (24): Steuerleitung
- O: Objekt

## Patentansprüche

1. Lichtvorhang (1) zur Erfassung von Objekten in einem Überwachungsbereich, mit einem sendeseitigen Gehäuse (2a) an einem ersten Rand des Überwachungsbereichs, in welchem eine Anordnung von Lichtstrahlen (3) emittierenden Sendern (4) vorgesehen ist, mit einem empfangsseitigen Gehäuse (6a) an einem zweiten Rand des Überwachungsbereichs, in welchem eine Anordnung von Empfängern (7) vorgesehen ist, wobei bei freiem Überwachungsbereich die Lichtstrahlen (3) der Sender (4) auf diesen zugeordnete Empfänger (7) auftreffen, und wobei ein Objekt im Überwachungsbereich die Lichtstrahlen (3) wenigstens eines Senders (4) unterbricht, und mit einer Auswerteeinheit (8), in welcher in Abhängigkeit von Empfangssignalen der Empfänger (7) ein Objektfeststellungssignal generiert wird, wobei in einem Gehäuse (2a, 6a) eine Anordnung von Ausrichtlichtstrahlen (9, 9a - 9e) emittierenden Ausrichtsendern (10, 10a - 10e) vorgesehen ist, wobei die Strahlcharakteristiken wenigstens eines Teils der Ausrichtlichtstrahlen (9, 9a - 9e) von den Strahlcharakteristiken der Lichtstrahlen (3) verschieden sind, und wobei Auswertemittel vorgesehen sind, in welchen anhand von auf den Ausrichtempfängern (11, 11a - 11e) auftreffenden Lichtmengen von Ausrichtlichtstrahlen (9, 9a - 9e) die Ausrichtgüte des Lichtvorhangs (1) ermittelt wird, wobei dessen Justage während eines Ausrichtbetriebs erfolgt, **dadurch gekennzeichnet, dass** die einzelnen Ausrichtlichtstrahlen (9, 9a - 9e) dadurch unterscheidbar sind, dass den Ausrichtlichtstrahlen (9, 9a - 9e) individuelle Kodierungen aufgeprägt sind, und/oder dass die Ausrichtlichtstrahlen (9, 9a - 9e) einzeln in unterschiedlichen Zeitintervallen emittiert werden, dass den Ausrichtlichtstrahlen (9, 9a - 9e) Kodierungen in Form von Pulsfolgen aufgeprägt sind, wobei die Pulse der Pulsfolgen im Lauf des Ausrichtbetriebs verändert werden, wobei insbesondere die Veränderung der Pulse der Pulsfolgen der Ausrichtlichtstrahlen (9, 9a - 9e) abhängig vom aktuellen Ergebnis der Ausrichtung des Lichtvorhangs (1) erfolgt, dass der Ausrichtbetrieb sendeseitig einstellbar ist, dass diese Einstellung über Kodierungen in Lichtstrahlen (3) und/oder Ausrichtlichtstrahlen (9, 9a - 9e) übertragen wird, und dass anhand der erfassten Kodierungen die Auswerteeinheit (8) in einen Ausrichtmodus wechselt, dass durch Auswertung von Empfangspegeln von Ausrichtempfängern (11, 11a - 11e) Winkelfehler und/oder Verschiebefehler der Ausrichtung des sendeseitigen Gehäuses (2a) relativ zum empfangsseitigen Gehäuse (6a) ermittelt werden, dass die Auswertung der Empfangspegel selektiv für unterschiedliche Ausrichtlichtstrahlen (9, 9a - 9e) erfolgt, und/oder dass durch Auswertung von Empfangspegeln benachbarter Ausrichtempfänger (11, 11a - 11e) Zwischenwerte für Winkel- und/oder Verschiebefehler berechnet werden.

2. Lichtvorhang (1) nach Anspruch 1, **dadurch gekennzeichnet, dass** Ausrichtsender (10, 10a - 10e) vorgesehen sind, die gegenüber den Lichtstrahlen (3) unterschiedliche Strahlrichtungen und/oder Abstrahlwinkel aufweisen.

3. Lichtvorhang (1) nach einem der Ansprüche 1 oder 2, **dadurch gekennzeichnet, dass** die Ausrichtsender (10, 10a - 10e) im sendeseitigen Gehäuse (2a) und die Ausrichtempfänger (11, 11a - 11e) im empfangsseitigen Gehäuse (6a) integriert sind.

4. Lichtvorhang (1) nach Anspruch 3, **dadurch gekennzeichnet, dass** wenigstens ein Teil der Ausrichtempfänger (11, 11a - 11e) von Empfängern (7) gebildet ist.

5. Lichtvorhang (1) nach einem der Ansprüche 1 bis 4, **dadurch gekennzeichnet, dass** die Empfangscharakteristiken und/oder Empfangsrichtungen der Ausrichtempfänger (11, 11a - 11e) untereinander unterschiedlich sind und/oder gegenüber den Empfangscharakteristiken und/oder Empfangsrichtungen der Empfänger (7) unterschiedlich sind.

6. Lichtvorhang (1) nach einem der Ansprüche 1 bis 5, **dadurch gekennzeichnet, dass** mehrere Ausrichtlichtstrahlen (9, 9a - 9e) über wenigstens ein gemeinsames Optikelement geführt sind.

7. Lichtvorhang (1) nach Anspruch 6, **dadurch gekennzeichnet, dass** ein sende- und/oder empfangsseitiges Optikelement vorgesehen ist, wobei als Optikelement ein Tubus (15) und/oder eine Linse (13) und/oder eine Blende (14) vorgesehen ist.

8. Lichtvorhang (1) nach einem der Ansprüche 1 bis 7, **dadurch gekennzeichnet, dass** die Aktivierung des Ausrichtbetriebs mittels sendeseitiger und/oder empfangsseitiger Schaltmittel erfolgt, oder dass der Ausrichtbetrieb bei Einschalten des Lichtvorhangs (1), oder dass der Ausrichtbetrieb selbsttätig aktiviert wird, wenn mit den Auswertemitteln eine unzureichende Ausrichtung des Lichtvorhangs (1) festgestellt wird, oder dass der Ausrichtbetrieb aktiviert wird, wenn vorgegebene Kodierungen in Lichtstrahlen (3) oder Ausrichtlichtstrahlen (9, 9a - 9e) erkannt werden.

9. Lichtvorhang (1) nach einem der Ansprüche 1 bis 8, **dadurch gekennzeichnet, dass** der Ausrichtbetrieb nach Ablauf eines vorgegebenen Zeitintervalls beendet wird, oder dass der Ausrichtbetrieb beendet wird, wenn eine vorgegebene Ausrichtgüte des Lichtvorhangs (1) erreicht ist.

10. Lichtvorhang (1) nach einem der Ansprüche 1 bis 9, **dadurch gekennzeichnet, dass** die Ausrichtlichtstrahlen (9, 9a - 9e) dauerhaft oder nur während des Ausrichtbetriebs emittiert werden, und/oder dass der Ausrichtbetrieb über die Auswerteeinheit (8) oder über eine Sendersteuerung (5) gesteuert ist.

11. Lichtvorhang (1) nach einem der Ansprüche 1 bis 10, **dadurch gekennzeichnet, dass** als Bestandteil der Auswerteeinheit (8) Ausrichtmittel vorhanden sind.

12. Lichtvorhang (1) nach einem der Ansprüche 1 bis 12, **dadurch gekennzeichnet, dass** Anzeigemittel vorgesehen sind, mittels derer die Ausrichtgüte angezeigt wird, und/oder dass mit den Anzeigemitteln spezifische Fehlstellungen angezeigt werden, wobei die Anzeigemittel an einer Außenseite des sendeseitigen und/oder empfangsseitigen Gehäuses (2a, 6a) vorgesehen sind.

13. Lichtvorhang (1) nach einem der Ansprüche 1 bis 12, **dadurch gekennzeichnet, dass** die Ausrichtsender (10, 10a - 10e) und/oder Ausrichtempfänger (11, 11a- 11e) eine Reihen-, Kreuz-, Zeilen- oder Matrixanordnung bilden, oder dass ein einzelner Ausrichtempfänger (11) vorgesehen ist.

14. Lichtvorhang (1) nach einem der Ansprüche 1 bis 13, **dadurch gekennzeichnet, dass** die Sender (4) und Ausrichtsender (10, 10a - 10e) einerseits und die Empfänger (7) und Ausrichtempfänger (11, 11a - 11e) andererseits jeweils über dieselben Ansteuermittel angesteuert sind, wobei nur die Sender (4) und Empfänger (7) zur Objektdetektion herangezogen werden.

15. Lichtvorhang (1) nach Anspruch 14, **dadurch gekennzeichnet, dass** die Sender (4) und Ausrichtsender (10, 10a - 10e) über eine Schiebekette (20) gemeinsam angesteuert werden, und dass die Empfänger (7) und Ausricht-empfänger (11, 11a - 11e) über eine Schiebekette (20) gemeinsam angesteuert werden.

16. Lichtvorhang (1) nach einem der Ansprüche 14 oder 15, **dadurch gekennzeichnet, dass** die Anzeigemittel Anzeigeelemente (16, 16a - 16c) aufweisen, die mit den Empfängern (7) und Ausrichtempfängern (11, 11a - 11e) mittels derselben Schiebekette (20) angesteuert werden.

17. Lichtvorhang (1) nach einem der Ansprüche 1 bis 16, **dadurch gekennzeichnet, dass** dieser ein Sicherheitssensor ist, wobei dieser Sicherheitsausgänge aufweist, wobei abhängig von Schaltzuständen der Sicherheitsausgänge eine Anlage gesteuert ist.

18. Lichtvorhang (1) nach Anspruch 17, **dadurch gekennzeichnet, dass** in dessen Überwachungsbetrieb die Sicherheitsausgänge eingeschaltet sind und dadurch der Betrieb der Anlage freigegeben ist, wenn im Überwachungsbereich kein Objekt detektiert wird, und dass die Sicherheitsausgänge ausgeschaltet sind und dadurch der Betrieb der Anlage stillgesetzt ist, wenn im Überwachungsbereich ein Objekt detektiert wird, und dass im Ausrichtbetrieb unabhängig davon ob ein Objekt im Überwachungsbereich detektiert wird oder nicht die Sicherheitsausgänge ausgeschaltet sind.

## Claims

1. A light curtain (1) for detecting objects in a monitoring area, with a housing (2a) on the transmitting side at a first edge of the monitoring area, in which an arrangement of transmitters (4) emitting light beams (3) is provided, with a housing (6a) on the receiving side at a second edge of the monitoring area, in which an arrangement of receivers (7) is provided, the light beams (3) of the transmitters (4) impinging on receivers (7) assigned to them when the monitoring area is free, and an object in the monitoring area interrupting the light beams (3) of at least one transmitter (4), and with an evaluation unit (8), in which an object detection signal is generated as a function of received signals from the receivers (7), an arrangement of alignment transmitters (10, 10a - 10e) emitting alignment light beams (9, 9a - 9e) being provided in a housing (2a, 6a), the beam characteristics of at least some of the alignment light beams (9, 9a - 9e) are different from the beam characteristics of the light beams (3), and evaluation means are provided in which the alignment quality of the light curtain (1) is determined on the basis of light quantities of alignment light beams (9, 9a - 9e) impinging on the alignment receivers (11, 11a - 11e), the alignment of the light curtain (1) being carried out by selecting an alignment mode, **characterised in that** the individual alignment light beams (9, 9a - 9e) can be distinguished **in that** the alignment light beams (9, 9a - 9e) are imprinted with individual codes, and/or **in that** the alignment light beams (9, 9a - 9e) are emitted individually at different time intervals, **in that** the alignment light beams (9, 9a - 9e) are imprinted with codes in the form of pulse sequences, wherein the pulses of the pulse sequences are changed in the course of the alignment operation, wherein in particular the change in the pulses of the pulse sequences of the alignment light beams (9, 9a - 9e) takes place depending on the current result of the alignment of the light curtain (1), **in that** the alignment operation is adjustable on the transmitter side, **in that** this setting is transmitted via codes in light beams (3) and/or alignment light beams (9, 9a - 9e), and **in that** the evaluation unit (8) switches to an alignment mode on the basis of the codes detected, **in that** angle errors are detected by evaluating reception levels of alignment receivers (11, 11a - 11e), angular errors and/or displacement errors of the alignment of the transmitter-side housing (2a) relative to the receiver-side housing (6a) are determined, **in that** the evaluation of the reception levels is carried out selectively for different alignment light beams (9, 9a - 9e), and/or **in that** intermediate values for angular and/or displacement errors are calculated by evaluating reception levels of neighbouring alignment receivers (11, 11a - 11e).

2. A light curtain (1) according to claim 1, **characterised in that** alignment transmitters (10, 10a - 10e) are provided which have different beam directions and/or beam angles relative to the light beams (3).

3. A light curtain (1) according to one of claims 1 or 2, **characterised in that** the alignment transmitters (10, 10a - 10e) are integrated in the housing (2a) on the transmitting side and the alignment receivers (11, 11a - 11e) are integrated in the housing (6a) on the receiving side.

4. A light curtain (1) according to claim 3, **characterised in that** at least some of the alignment receivers (11, 11a - 11e) are formed by receivers (7).

5. A light curtain (1) according to one of claims 1 to 4, **characterised in that** the reception characteristics and/or reception directions of the alignment receivers (11, 11a - 11e) are different from one another and/or are different from the reception characteristics and/or reception directions of the receivers (7).

6. A light curtain (1) according to one of claims 1 to 5, **characterised in that** several alignment light beams (9, 9a - 9e) are guided via at least one common optical element.

7. A light curtain (1) according to claim 6, **characterised in that** an optical element on the transmitting and/or receiving side is provided, wherein a tube (15) and/or a lens (13) and/or an aperture (14) is provided as the optical element.

8. A light curtain (1) according to one of claims 1 to 7, **characterised in that** the alignment mode is activated by means of switching means on the transmitting side and/or receiving side, or **in that** the alignment mode is activated when the light curtain (1) is switched on, or **in that** the alignment mode is activated automatically when the evaluation means detect an insufficient alignment of the light curtain (1), or **in that** the alignment mode is activated when predetermined codings in light beams (3) or alignment light beams (9, 9a - 9e) are recognised.

9. A light curtain (1) according to one of claims 1 to 8, **characterised in that** the alignment operation is terminated after a predetermined time interval has elapsed, or **in that** the alignment operation is terminated when a predetermined alignment quality of the light curtain (1) has been achieved.

10. A light curtain (1) according to one of claims 1 to 9, **characterised in that** the alignment light beams (9, 9a - 9e) are emitted permanently or only during the alignment mode, and/or **in that** the alignment mode is controlled via the evaluation unit (8) or via a transmitter control (5).

11. A light curtain (1) according to one of claims 1 to 10, **characterised in that** alignment means are present as a component of the evaluation unit (8).

12. A light curtain (1) according to one of claims 1 to 12, **characterised in that** display means are provided, by means of which the alignment quality is displayed, and/or **in that** specific misalignment positions are displayed with the display means, the display means being provided on an outer side of the housing (2a, 6a) on the transmitting side and/or receiving side.

13. A light curtain (1) according to one of claims 1 to 12, **characterised in that** the alignment transmitters (10, 10a - l0e) and/or alignment receivers (11, 11a - 11) form a row, cross, line or matrix arrangement, or **in that** a single alignment receiver (11) is provided.

14. A light curtain (1) according to one of claims 1 to 13, **characterised in that** the transmitters (4) and alignment transmitters (10, 10a - l1e) on the one hand and the receivers (7) and alignment receivers (11, 11a - 11e) on the other hand are each controlled via the same control means, whereby only the transmitters (4) and receivers (7) are used for object detection.

15. A light curtain (1) according to claim 14, **characterised in that** the transmitters (4) and alignment transmitters (10, 10a -10e) are jointly controlled via a sliding chain (20), and **in that** the receivers (7) and alignment receivers (11, 11a - 11e) are jointly controlled via a sliding chain (20).

16. A light curtain (1) according to one of claims 14 or 15, **characterised in that** the display means comprise display elements (16, 16a - 16c) which are controlled with the receivers (7) and alignment receivers (11, 11a - 11e) by means of the same sliding chain (20).

17. A light curtain (1) according to one of claims 1 to 16, **characterised in that** this is a safety sensor, wherein this has safety outputs, wherein a system is controlled depending on the switching states of the safety outputs.

18. A light curtain (1) according to claim 17, **characterised in that** in its monitoring mode the safety outputs are switched on and thus the operation of the system is enabled if no object is detected in the monitoring area, and **in that** the safety outputs are switched off and thus the operation of the system is stopped if an object is detected in the monitoring area, and **in that** in alignment mode the safety outputs are switched off irrespective of whether an object is detected in the monitoring area or not.

## Revendications

1. Rideau lumineux (1) pour la détection d'objets dans une zone de surveillance, avec un boîtier (2a) côté émission sur un premier bord de la zone de surveillance, dans lequel est prévu un agencement d'émetteurs (4) émettant des rayons lumineux (3), avec un boîtier (6a) côté réception sur un second bord de la zone de surveillance, dans lequel est prévu un agencement de récepteurs (7), les rayons lumineux (3) des émetteurs (4) étant incidents sur des récepteurs (7) associés à ceux-ci lorsque la zone de surveillance est libre, et un objet dans la zone de surveillance interrompant les rayons lumineux (3) d'au moins un émetteur (4), et avec une unité d'évaluation (8), dans laquelle un signal de détection d'objet est généré en fonction de signaux de réception des récepteurs (7), un agencement d'émetteurs lumineux d'alignement (10, 10a - 10e) émettant des rayons lumineux d'alignement (9, 9a - 9e) étant prévu dans un boîtier (2a, 6a), les caractéristiques de rayonnement d'au moins une partie des rayons lumineux d'alignement (9, 9a - 9e) sont différentes des caractéristiques des faisceaux lumineux (3), et des moyens d'évaluation étant prévus, dans lesquels la qualité d'alignement du rideau lumineux (1) est déterminée à l'aide de quantités de lumière de faisceaux lumineux d'alignement (9, 9a - 9e) arrivant sur les récepteurs d'alignement (11, 11a - 11e), l'ajustement de celui-ci s'effectuant en sélectionnant un mode d'alignement, caractérisé, les différents faisceaux lumineux d'alignement (9, 9a - 9e) peuvent être distingués par le fait que des codages individuels sont imprimés sur les faisceaux lumineux d'alignement (9, 9a - 9e), et/ou que les faisceaux lumineux d'alignement (9, 9a - 9e) sont émis individuellement à des intervalles de temps différents, que les faisceaux lumineux d'alignement (9, 9a - 9e), les impulsions des séquences d'impulsions étant modifiées au cours du fonctionnement d'alignement, la modification des impulsions des séquences d'impulsions des faisceaux lumineux d'alignement (9, 9a - 9e) s'effectuant en particulier en fonction du résultat actuel de l'alignement du rideau lumineux (1), en ce que le fonctionnement d'alignement est réglable côté émission, en ce que ce réglage est transmis par des codages dans des faisceaux lumineux (3) et/ou des faisceaux lumineux d'alignement (9, 9a - 9e), et en ce qu'à l'aide des codages détectés, l'unité d'évaluation (8) passe dans un mode d'alignement, en ce que, par évaluation de niveaux de réception de récepteurs d'alignement (11, 11a - 11e), des erreurs d'angle et/ou des erreurs de décalage de l'alignement du boîtier (2a) côté émission par rapport au boîtier (6a) côté réception sont déterminées, en ce que l'évaluation des niveaux de réception s'effectue de manière sélective pour différents faisceaux lumineux d'alignement (9, 9a - 9e), et/ou en ce que, par évaluation des niveaux de réception de récepteurs d'alignement (11, 11a - 11e) voisins, des valeurs intermédiaires sont calculées pour des erreurs d'angle et/ou de décalage.

2. Rideau lumineux (1) selon la revendication 1, **caractérisé en ce qu'**il est prévu des émetteurs d'alignement (10, 10a - 10e) qui présentent des directions de faisceau et/ou des angles de rayonnement différents par rapport aux rayons lumineux (3).

3. Rideau lumineux (1) selon l'une des revendications 1 ou 2, **caractérisé en ce que** les émetteurs d'alignement (10, 10a - l0e) sont intégrés dans le boîtier (2a) côté émission et les récepteurs d'alignement (11, 11a - 11e) dans le boîtier (6a) côté réception.

4. Rideau lumineux (1) selon la revendication 3, **caractérisé en ce qu'**au moins une partie des récepteurs d'alignement (11, 11a -11e) est formée par des récepteurs (7).

5. Rideau lumineux (1) selon l'une des revendications 1 à 4, **caractérisé en ce que** les caractéristiques de réception et/ou les directions de réception des récepteurs d'alignement (11, 11a - 11e) sont différentes les unes des autres et/ou sont différentes par rapport aux caractéristiques de réception et/ou aux directions de réception des récepteurs (7).

6. Rideau lumineux (1) selon l'une des revendications 1 à 5, **caractérisé en ce que** plusieurs faisceaux lumineux d'alignement (9, 9a - 9e) sont guidés par au moins un élément optique commun.

7. Rideau lumineux (1) selon la revendication 6, **caractérisé en ce qu'**il est prévu un élément optique côté émission et/ou réception, un tube (15) et/ou une lentille (13) et/ou un diaphragme (14) étant prévus comme élément optique.

8. Rideau lumineux (1) selon l'une des revendications 1 à 7, **caractérisée en ce que** l'activation du mode d'alignement s'effectue à l'aide de moyens de commutation côté émission et/ou côté réception, ou **en ce que** le mode d'alignement est activé lors de la mise en marche du rideau lumineux (1), ou que le mode d'alignement est activé automatiquement lorsqu'un alignement insuffisant du rideau lumineux (1) est constaté à l'aide des moyens d'évaluation, ou que le mode d'alignement est activé lorsque des codages prédéfinis sont détectés dans des rayons lumineux (3) ou des rayons lumineux d'alignement (9, 9a - 9e).

9. Rideau lumineux (1) selon l'une des revendications 1 à 8, **caractérisé en ce que** l'opération d'alignement est terminée après l'écoulement d'un intervalle de temps prédéfini, ou **en ce que** l'opération d'alignement est terminée lorsqu'une qualité d'alignement prédéfinie du rideau lumineux (1) est atteinte.

10. Rideau lumineux (1) selon l'une des revendications 1 à 9, **caractérisé en ce que** les faisceaux lumineux d'alignement (9, 9a - 9e) sont émis en permanence ou uniquement pendant le mode d'alignement, et/ou **en ce que** le mode d'alignement est commandé par l'unité d'évaluation (8) ou par une commande d'émetteur (5).

11. Rideau lumineux (1) selon l'une des revendications 1 à 10, **caractérisé en ce que** des moyens d'alignement sont présents en tant que partie intégrante de l'unité d'évaluation (8).

12. Rideau lumineux (1) selon l'une des revendications 1 à 12, **caractérisé en ce que** des moyens d'affichage sont prévus, au moyen desquels la qualité de l'alignement est affichée, et/ou **en ce que** des positions erronées spécifiques sont affichées avec les moyens d'affichage, les moyens d'affichage étant prévus sur un côté extérieur du boîtier (2a, 6a) côté émission et/ou côté réception.

13. Rideau lumineux (1) selon l'une des revendications 1 à 12, **caractérisé en ce que** les émetteurs d'alignement (10, 10a - l0e) et/ou les récepteurs d'alignement (11, 11a - 11) forment un agencement en série, en croix, en ligne ou en matrice, ou **en ce qu'**il est prévu un seul récepteur d'alignement (11).

14. Rideau lumineux (1) selon l'une des revendications 1 à 13, **caractérisé en ce que** les émetteurs (4) et les émetteurs d'alignement (10, 10a - l0e) d'une part, et les récepteurs (7) et les récepteurs d'alignement (11, 11a - 11e) d'autre part, sont respectivement commandés par les mêmes moyens de commande, seuls les émetteurs (4) et les récepteurs (7) étant utilisés pour la détection d'objets.

15. Rideau lumineux (1) selon la revendication 14, **caractérisé en ce que** les émetteurs (4) et les émetteurs d'alignement (10, 10a - 10e) sont commandés ensemble par une chaîne coulissante (20), et **en ce que** les récepteurs (7) et les récepteurs d'alignement (11, 11a - 11e) sont commandés ensemble par une chaîne coulissante (20).

16. Rideau lumineux (1) selon l'une des revendications 14 ou 15, **caractérisé en ce que** les moyens d'affichage comportent des éléments d'affichage (16, 16a-16c) commandés par les récepteurs (7) et les récepteurs d'alignement (11, 11 - 11e) au moyen d'une même chaîne coulissante (20).

17. Rideau lumineux (1) selon l'une des revendications 1 à 16, **caractérisé en ce qu'**elle est un capteur de sécurité, celui-ci présentant des sorties de sécurité, une installation étant commandée en fonction des états de commutation des sorties de sécurité.

18. Rideau lumineux (1) selon la revendication 17, **caractérisé en ce que** dans son mode de surveillance, les sorties de sécurité sont activées et le fonctionnement de l'installation est ainsi libéré si aucun objet n'est détecté dans la zone de surveillance, et **en ce que** les sorties de sécurité sont désactivées et le fonctionnement de l'installation est ainsi arrêté si un objet est détecté dans la zone de surveillance, et **en ce que** dans le mode d'alignement, indépendamment du fait qu'un objet soit détecté ou non dans la zone de surveillance, les sorties de sécurité sont désactivées.
